(19) Europäisches Patentamt
European Patent Office
Office européen des brevets

(11) **EP 2 023 119 A1**

(12) **EUROPEAN PATENT APPLICATION**

(43) Date of publication:
**11.02.2009 Bulletin 2009/07**

(51) Int Cl.:
*G01N 3/22* (2006.01)          *G01N 33/483* (2006.01)

(21) Application number: **07114178.2**

(22) Date of filing: **10.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Universität Bayreuth
95440 Bayreuth (DE)**

(72) Inventor: **The designation of the inventor has not yet been filed**

(74) Representative: **Sandmann, Wolfgang
Reinhard, Skuhra, Weise & Partner GbR
Patent- und Rechtsanwälte
Friedrichstrasse 31
80801 München (DE)**

(54) **Biological cell monolayer shearing apparatus for diagnostic purposes**

(57)     The present invention is directed to a method for determining the mechanical properties of biological cells wherein a cell sample is introduced into a gap formed by two essentially parallel and horizontal plates, a cell monolayer is formed, shear stress is applied to said cell monolayer and the mechanical response of said cell monolayer is measured. The present invention is further directed to a device for performing the method.

Fig.1

**Description**

The present invention is directed to a method for determining the mechanical properties of biological cells. The present invention is further directed to a device for performing the method.

**Background of the invention**

Cell mechanical properties depend mostly on the cytoskeleton, a multifunctional, cross-linked, active (i.e. energy dissipating) network with three types of biopolymers (actin, microtubules and intermediate filaments) as key components (Molecular Biology of the Cell, Alberts et al., Garland Publishing 1994, 4th Edition).
Interestingly, often the cytoskeleton is among the first cell components to be altered during disease. Cancer has been known to affect cytoskeletal components early (Current Communications in Molecular Biology "Cytoskeletal Proteins in Tumor Diagnosis", M. Osborn and K .Weber Editors, Cold Spring Harbor Laboratory Publications, 1989), research to diagnose cancer by the measurement of cell mechanical properties has made very promising advances recently (Optical Deformability as an Inherent Cell Marker for Testing Malignant Transformation and Metastatic Competence Jochen Guck, Stefan Schinkinger, Bryan Lincoln, Falk Wottawah, Susanne Ebert, Maren Romeyke, Dominik Lenz, Harold M. Erickson, Revathi Ananthakrishnan, Daniel Mitchell, Josef Käs, Sydney Ulvick and Curt Bilby, Biophys. J., 88, 3689-3698, 2005).
A problem in cell mechanics is that a useful scientific and quantitative description of some aspects of cell mechanical properties has only been achieved very recently. Surprisingly, a consensus has been found between different cell types (The consensus mechanics of cultured mammalian cells B. D. Hoffman, G. Massiera, K. M. Van Citters, and J. C. Crocker Proc. Nat Acad. Sci. 2006, 103 no.27, 10259-10264).
Fernandez et al. have investigated the properties of single cells and cell collections as well. They have shown that the lengthscale of perturbation is a key parameter in the description of cell mechanical properties (A master relation defines the non-linear viscoelasticity of single fibroblasts P. Fernandez, P.A. Pullarkat and A. Ott, Biophysical Journal 90(9) 3796-3805, 2006). Recently they suggested, that two simple relations define the passive cell mechanical properties (arXiv: 0706.388v1 [physics.bio-ph] 26 JUN 2007). One may expect that these very recent advances in the techniques and the phenomenological description of cell mechanical properties will lead to simple protocols for a proper identification of changes of cell mechanical properties in conjunction with diagnosis of disease. Thus, it arises the need for devices, which allow one to assess the mechanical properties of cells in a well-defined and reproducible way.
Although the problem appears simple, in spite of many efforts, a standard procedure for the assessment of cell mechanical properties has not been found. It is mainly because of this, that the link between mechanical cell properties and disease is not yet understood. There are techniques to determine the mechanical properties at the single cell and at the subcellular level. A large spread in the cytoskeletal properties at the subcellular as well as the individual cell level makes the situation difficult. Studying cell populations may average out this spread and could in principle be performed on whole tissue. However, averaging on whole tissue level can decrease the information content of the measurement due to the involvement of the extracellular matrix. A further difficulty with such measurements is that measurements on cell tissues may give a different response from measurements on isolated cells. This is because cells recognize their environment and change their mechanical aspects as a function of it. Furthermore, the cell- tissues often consist of different cell-types.
Therefore a meaningful, controlled measurement on a small population of isolated, individual cells is desirable. This is, however, difficult due to the fact that cells often have a tendency to stick to each other in uncontrolled ways.

Previous developments:

Many techniques have been used to study cell mechanical properties at the subcellular scale and at the scale of whole tissues. However, for the study of entire cells so far only two techniques have been developed.

a) The microplate single cell-stretcher

For cell mechanical studies, we developed a single-cell stretcher using the microplate technique, details are published (Time scale dependent viscoelastic and contractile regimes in fibroblasts probed by microplate manipulation, O. Thoumine, A. Ott, J. Cell Sci 110, (1997), 2109-2116).
Advantages of the microplate technique are several:

   1) A well-defined geometry of measurement, as the cell is positioned between two parallel walls.
   2) The apparatus allows one to perform huge cell deformations of about 6 times the cell size. It can reach forces exceeding cell forces. One can study the entire force length parameter range, which is accessible to a cell.

3) The position of the plates is controllable optically. A feedback circuit allows the user to control length or force independently and to impose arbitrary force-length curves on the cells.

4) Coating the walls with suitable biomolecules can mimic biofunctional cell adhesion to the walls, which leads to cell signaling. This can lead to a more precise mechanical cell state thus increasing the significance of the measurement.

5) The cells can be observed with a microscope during the experiment.

The single cell-stretcher has substantial advantages over other techniques like Atomic Force Microscopes, Micropipettes or the Optical Cell Stretcher (see under b) below). Details of the latter techniques are discussed in (Rheological Properties of the Eukaryotic Cell Cytoskeleton. Pramod A. Pullarkat, Pablo Fernandez, and Albrecht Ott, to appear in Physics Reports (2007), available online before print, doi:10.1016/j.physrep.2007.03.002). The microplate technique has been successfully used for the investigation of disease related cell mechanical changes (Connections between single-cell biomechanics and human disease states: gastrointestinal cancer and malaria S. Suresh, J. Spatz, J.P. Mills, A. Micoulet, M. Dao , C.T. Lim, M. Beil, T. Seufferlein, Acta Biomaterialia 1 (2005) 15-30).

Although the microplate technique is the best available technique to date and even a commercial version of the technique has been suggested (Fa. WITEC, Ulm), a disadvantage of the microplate technique is that it is time consuming and it demands high skills from a well-trained user. It can only be applied to extremely well adhering cells. For this reason, the success in routine diagnosis has been more than limited.

For applications in diagnosis, high throughput measurements are needed, which should ideally have all of the advantages of the microplate single cell stretcher however avoid the drawbacks and limitations.

b) The optical cell stretcher (WO 99/44488)

For the purpose of gaining detailed information on the mechanical properties of a cell population, Käs and collaborators patented an optical cell stretcher (WO 99/44488, US 6,067,859 "Optical Stretcher" (May 2000), EP 1 059 871 "Optical Stretcher" (Nov. 2000). Here the optical beam deforms (stretches) a non-adherent cell. An advantage of the apparatus is that a huge number of individual cells can be screened in a short time without averaging over the entire population. A drawback of the technique is that the cell deformation forces are weak, much weaker than the forces generated by cells, and that the cells do not adhere during the measurement (and therefore their cytoskeletal state is not so well-defined).

However, in spite of these drawbacks the optical cell stretcher allows one to diagnose tumors early (Optical Deformability as an Inherent Cell Marker for Testing Malignant Transformation and Metastatic Competence Jochen Guck, Stefan Schinkinger, Bryan Lincoln, Falk Wottawah, Susanne Ebert, Maren Romeyke, Dominik Lenz, Harold M. Erickson, Revathi Ananthakrishnan, Daniel Mitchell, Josef Käs, Sydney Ulvick and Curt Bilby, Biophys. J., 88, 3689-3698, 2005)

Summary of the invention

Therefore, it is an object of the present invention to provide a method and a device for performing that method which allow one to assess the mechanical properties of cells in a well-defined and reproducible way. It is a further object of the invention to provide the possibility of a meaningful, controlled measurement on a small population of isolated, individual cells.

These problems are solved by the subject-matter of the independent claims. Preferred embodiments are contained in the dependent claims.

The present application is, among others, directed to a device, which may perform a measurement on a small population of isolated (also sticky) cells such as fibroblasts. This technique provides very quantitative, reproducible and reliable data as it averages over a small population of individually isolated cells. It is based on arranging these isolated cells at a controlled density to form a cell monolayer between two flat surfaces. As it is explained in the following, this is non-trivial and a perquisite to obtaining meaningful mechanical information on cells in a short time and with excellent precision. Optical techniques can probe only the linear mechanical regime. At higher deformation forces nonlinearities occur, which allow one to characterize the cell state in a much more complete way. By the present method and device, much better resolution and more reliable data are being obtained by enabling to probe both, the linear and the non-linear regime.

As already mentioned above, a measurement on cell tissues can give very different results from the measurement on single cells. It is therefore very important to do measurements on isolated cells or on small collections of independent cells arranged as a monolayer, which gives an ensemble average.

For a good characterization of cell mechanical properties, it is important that the cells adhere during the measurement to specifically treated substrates in a well-defined geometry. The biochemical nature of cell adhesion during the measurement needs to be controlled in order to define the state of the cytoskeleton. This leads to a situation, where cells must be suspended between two walls. This is relatively straightforward for a single cell. However, due to cell adhesion to surfaces as well as between cells, arranging the cells as a cell monolayer of isolated cells for measurement purposes is far from trivial and has not been achieved so far. In the present application we present an apparatus and a protocol, which circumvent existing difficulties and makes a measurement on a cell monolayer possible in simple ways.

The apparatus described in the following can measure the cell deformation with adherent cells and reach orders of magnitude higher cell deformation forces when compared to optical techniques. The nonlinear mechanical responses can be probed and hence it is a more sensitive technique, this translates to more meaningful data when compared to an optical technique. Further, the state of the cell is much more well-defined than with the optical stretching experiment due to biochemically defined cell adhesion and the biochemical signaling that comes with it. The here proposed technique applies shear deformations, which are easier to interpret in mechanical terms when compared to stretch deformations applied by microplates or optical stretcher.

Also, stretching demands a strong adhesion of cells to the surfaces, surprisingly shearing releases the importance of this constraint. As a conclusion, the here proposed technique has most of the advantages of the single cell microplate stretcher, but performs the measurement on a small population of cells (or if desired even single cells) in a much simpler way. This shortens the measurement time and its analysis considerably. The handling of the device is much simpler than for the single cell microplate stretcher. Another advantage of the here proposed technique is that a much larger frequency range can be probed compared to microplates or optical stretcher techniques. Cell shearing is simpler to interpret than stretching: the device directly gives the elastic and viscous parameters without the need for further processing. The one-shot automatic averaging of the data over up to a million cells greatly enhances sensitivity and reproducibility. This is very important for detecting minor changes occurring as a result of disease related abnormalities in mechanical properties.

**Detailed description of the invention**

In a first aspect, the present invention provides a method for determining the mechanical properties of biological cells, comprising:

   a) providing a cell sample to be tested;
   b) forming the cells to a cell monolayer;
   c) applying shear stress and/or shear deformation to said cell monolayer; and
   d) measuring the mechanical response of said cell monolayer.

The cell sample preferably is an animal or human cell sample. For example, the sample is derived from a body tissue, which is suspected of having underwent a physiological or pathological modification, which could have amended the structure of said cells. The sample may be obtained by biopsy or related techniques, which are by themselves known in the art.

A "monolayer" of cells, as used herein, simply is to be regarded as an arrangement of cells in a single layer.

In an embodiment of the invention, the cell monolayer is formed by suspending the cells and placing them between two parallel plates. The plates preferably are coated with adhesion promoting molecules. They are located horizontally, thus forming an upper and a lower plate. Further details regarding forming and maintaining the cell monolayers can be found in chapter "Examples" below.

In step b), the cells in suspension preferably are placed on the lower plate and the upper plate then is lowered after a defined time period, preferably about 10 min, until the cells are slightly compressed. If this procedure is finished, the cells adhere to both plates in order to allow a proper and reliable measurement of the mechanical response of said cell monolayer.

As already outlined above, the present method allows determining the mechanical properties of biological cells for low as well as high adherence of the cells to the plates.

In a further preferred embodiment, the cell density can be adjusted to get a collection of isolated cells at a predefined density. Again, this allows a more precise and reproducible measurement of the mechanical properties of the cells.

As mentioned above, the present method may find application in an ex vivo diagnostic method. In this case, it comprises the additional step that the information obtained in step d) is used in a diagnostic method. For example, modifications in the mechanical behaviour of the cells may give an indication on pathological modification in said cells. In order to give a meaningful result, the sample suspected to be pathological may be compared with healthy tissue and/or with pathological tissues from a different patient in order to allow a more precise diagnosis of the respective state of disease.

As such, the diagnostic method may find application in a method for the diagnosis of cancer/precancer. Among others, the following pathological conditions may be named as an example:

- acute leukemias

- heart muscle (cardiomyocite related) disease

In a second aspect, the present invention provides a device for performing the method according to the invention comprising: two essentially parallel and horizontal plates having a gap between them; means for introducing biological cells in the gap; means for forming and maintaining a cell monolayer in the gap; an actuator for moving the two plates relative to each other for applying shear stress and/or shear deformation to the cell monolayer causing the cells in the monolayer to deform; and measuring means for measuring the relative movement of the plates and/or the shear stress and/or shear deformation.

The device according to the invention allows for a simple measurement of the shear deformation of the cell monolayer as a function of the applied shear stress or vice versa. This relationship can then be used to characterize the cell monolayer and/or the individual cells in the monolayer with respect to their mechanical properties. Preferably, the shear stress and/or shear deformation of the cell monolayer is measured indirectly by measuring the movement of the two plates relative to each other and measuring the force applied by the actuator to produce the relative movement. However, the shear stress and/or shear deformation can also be measured directly, for instance by means of optical techniques. Such an optical technique would emit light on the cell monolayer and measure the reflection before and after moving the two plates relative to each other and, finally, would determine the shear deformation from the differences in the reflective pattern.

According to a preferred embodiment of the device, the measuring means is a transducer configured to measure a force and/or a torque transmitted by the actuator to the plates for moving the two plates relative to each other and to measure the relative movement of the two plates and terms of displacement and/or angular displacement. This embodiment leads to a very simple design of the device.

Preferably, the actuator is configured to rotate the upper plate with respect to the lower plate. Of course, also a reversed configuration can be selected, wherein the lower plate rotates relative to the upper plate. A rotating set-up simplifies the design of the device even more. In particular, the kinematic design is simplified by having rotating parts as opposed to linearly moving parts and the measurement of torque and angular displacement for the rotating set-up can be achieved with ease.

According to a further preferred embodiment of the device, at least one of the plates comprises an elevated ring surface, so that only the cells on the elevator ring contribute to the measurement. For the purpose of the present invention an "elevated ring surface" refers to a surface of one of the plates, which is offset from the plate in the direction of the other plate and which is ring-shaped with a ring centre axis normal to the plane of the plates. Of course, the elevator ring can be formed on both plates, wherein the rings are arranged such that they essentially oppose one another.

In a further preferred embodiment of the device, the elevated ring surface is produced by means of a circular recess formed in at least one of the plates, which circular recess has a width between 50 $\mu$m and 1 mm, preferably about 100 $\mu$m. Such a circular recess can be produced by any well-known cutting technique, such as milling. For the purpose of this invention, the width of the circular recess is defined as the distance from the bottom of the recess to the surface of the other plate facing the circular recess. A width of such a dimension ensures that the cells contained in the circular recess are not in contact with both plates and thus do not contribute to the measurement of the shear stress and shear deformation. The only cells that do contribute to the measurements are those arranged between the elevated ring surface and the surface of the other plate facing the elevated ring surface. Thus, it is only measured on cells having a considerable distance from the center of rotation. Since these cells have a considerable lever around the axis of rotation, the torque signal from the cells on the elevated ring surface will be detectable over a wider range. Further the cells on the outer ring are deformed in the same way and their deformation is of the same magnitude for all the cells under study, which enhances the quality of the measurement.

In a further preferred embodiment, the device according to the invention has a controller such that arbitrary torque angular displacement and/or force displacement relationships can be measured. Preferably, the controller is connected to the transducer delivering a signal for the force and/or torque and/or displacement and/or angular displacement to the controller. The controller can also be used to evaluate the torque - angular displacement and force - displacement relationships.

According to a further preferred embodiment of the device, the means for forming and maintaining the cell monolayer and the gap comprise an actuator configured to load the plates such that the introduced cells are compressed with a defined force. This causes the cells to redistribute in the gap, thus forming a monolayer. Once the cells have formed a monolayer, the width of the gap is maintained and the load on the plates is preferably removed.

In another preferred embodiment of the device, a variation of the gap width G is below half a cell diameter, preferably below 1 $\mu$m across the entire surface of the plates used for measurement. This leads to very accurate results for the measurement of the shear stress and the shear deformation of the cell monolayer.

Preferably, the two plates are maintained essentially parallel during the measurement. This improves the quality of the measurement even more.

According to another preferred embodiment, the device comprises optical means for checking the parallelism of the two plates. Preferably, the optical means can be connected to a signaling device signaling a user to adjust the position of the plates, in particular by means of adjustment screws on the lower or upper plate.

According to another preferred embodiment of the device, the surfaces of the plates are coated with cell adhesion promoting molecules, preferably fibronectin. In order to shear the cell monolayer, a force in the plane of the plates must be produced on the cell monolayer. For this purpose, it is preferred that the cells adhere at the substantially opposed surfaces of their circumferences to the plates.

According to a further preferred embodiment of the device, the means for introducing the cells comprise a hole in one of the plates through which the cells can be introduced into the gap. This simplifies the introduction of the biological cells in the gap.

According to another preferred embodiment, the device comprises means for controlling the temperature of the plates. Temperature has an effect on the shear stress versus shear deformation relationship of the cells and must thus be counted for.

According to a further embodiment of the device, the device additionally comprises an objective and/or a camera for verifying the cell state, cell adhesion or to measure the cell density. These factors should also be considered when determining the shear stress versus shear deformation relationship of the cell monolayer.

## Description of the Figures

In the accompanying drawings, the following is shown:

Fig. 1 is a schematic side view of a device according to an embodiment of the present invention; and

Fig. 2 shows a cross-section A - A from Fig. 1, wherein the shape of the plates differs from the shape of the plates in Fig. 1.

In the figures, the same reference signs designate the same or functionally equivalent parts.

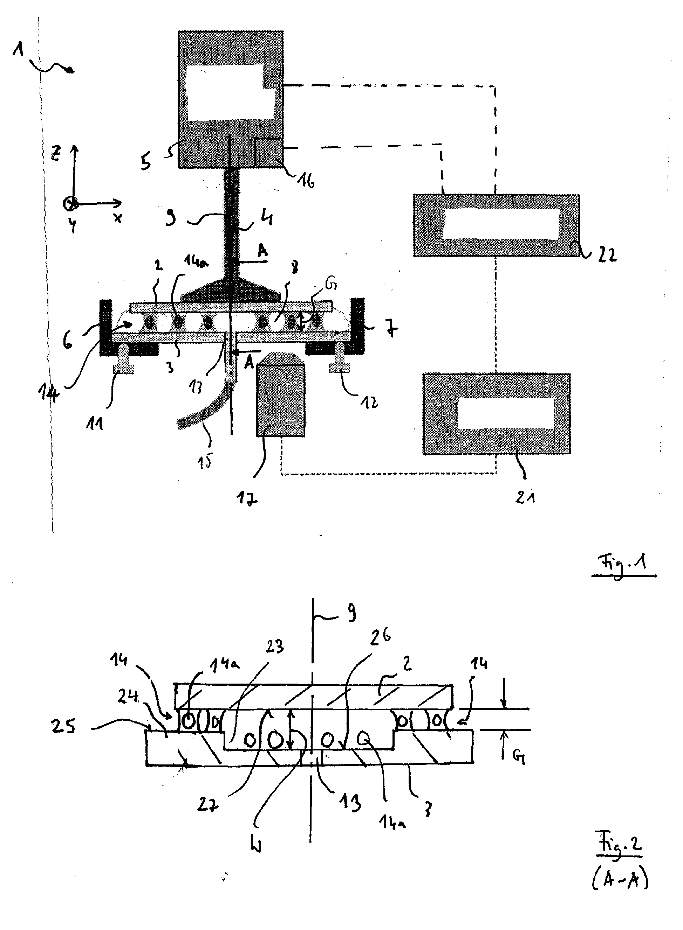

Fig. 1 shows a device 1 according to an embodiment of the present invention.

The device 1 comprises two essentially parallel, horizontal plates 2, 3 having a gap 8 between them. Plate 2 is an upper plate and plate 3 is a lower plate with respect to ground. Preferably, plates 2, 3 have a circular shape when viewed from the top. Preferably, plates 2, 3 are made of glass or the like. Preferably, the variation of the gap width G is below 1 $\mu$m in the horizontal direction.

Plate 2 is connected by means of a shaft 4 to an actuator 5, which is configured to rotate plate 2 relative to plate 3, which is stationary. Plate 3 is held by a support 6, 7 and is adjustable with respect to the horizontal plane (x-y-plane) by means of adjusting screws 11, 12.

Plate 3 comprises a hole 13 at its center, through which cells (as an example, one cell is designated with the reference sign 14a) can be introduced. Furthermore, hole 13 is connected to a supply pipe 15 through which biological cells can be supplied to hole 13.

In order to increase the adhesion between the plates 2, 3 and the cells 14a which are to be introduced into gap 8 between plates 2, 3, the plates 2, 3 are preferably coated with fibronectin on their surfaces facing the gap 8.

Preferably, the actuator 5 is configured to move the shaft 4 upwards (in the z-direction) for introducing cells 14a into gap 8 and to move shaft 4 and thus plate 2 downwards (opposite to the z-direction) for forming the introduced cells 14a into a cell monolayer 14.

Furthermore, device 1 has a transducer 16 configured to measure the torque produced by the actuator 5, preferably an electric motor, on the shaft 4 and thus on the upper plate 2 around an axis of rotation 9. Moreover, the transducer 16 measures the angular displacement of plate 2 around the axis of rotation 9.

The device 1 further preferably comprises an objective 17 and a camera 21 coupled to the objective 17.

Camera 21, actuator 5 and transducer 16 are electrically coupled to a controller 22. The camera 21 can for instance supply a signal indicative of the cell density to controller 22, which is then taken into account when determining the torque vs. angular displacement relationship recorded by controller 22.

Fig. 2 shows a preferred shape of plates 2, 3 in a cross-sectional view A - A from Fig. 1.

The plate 3 comprises a circular recess 23, wherein the centre of circular recess 23 coincides with the axis of rotation 9. As a result, a ring 24 is produced, wherein the centre of the ring also coincides with the axis of rotation 9. Ring 24 has thus an elevated (offset) surface 25 with respect to the bottom surface 26 of circular recess 23.

The distance between the bottom surface 26 of recess 23 and a surface 27 of plate 2 is designated with W and is preferably about 100 μm. Thus, the cells 14a in the recess 23 are in contact with plate 3 and not with plate 2, thus not contributing to the torque around the axis of rotation 9. However, the cell monolayer 14 formed between elevated surface 25 and surface 27, produces a reaction torque around the axis of rotation 9 when actuator 5 produces a torque on plate 2.

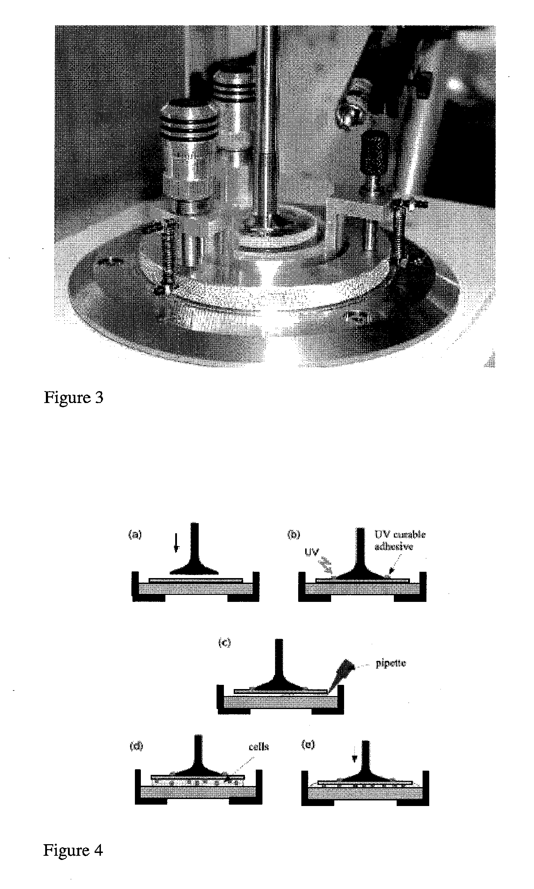

Figure 3 is a photograph of the Cell Monolayer Rheology setup. The levelling screws (±1μm precision) are used for fine corrections to the alignment, if the plates are not parallel after following the procedure described in the text.

Figure 4: Schematic showing the various steps involved in preparing the cell monolayer. (a) The two optically flat glass plates are placed in perfect contact, (b) a UV curable adhesive is used to glue the top glass plate to the rheometer head, (c) solutions of adhesion promoting proteins used for surface treatment or the cell suspension can be loaded between the plates using a pipette, (d) the cells, after loading, are allowed to sediment, and (e) the top glass plate is lowered until the cells are slightly compressed.

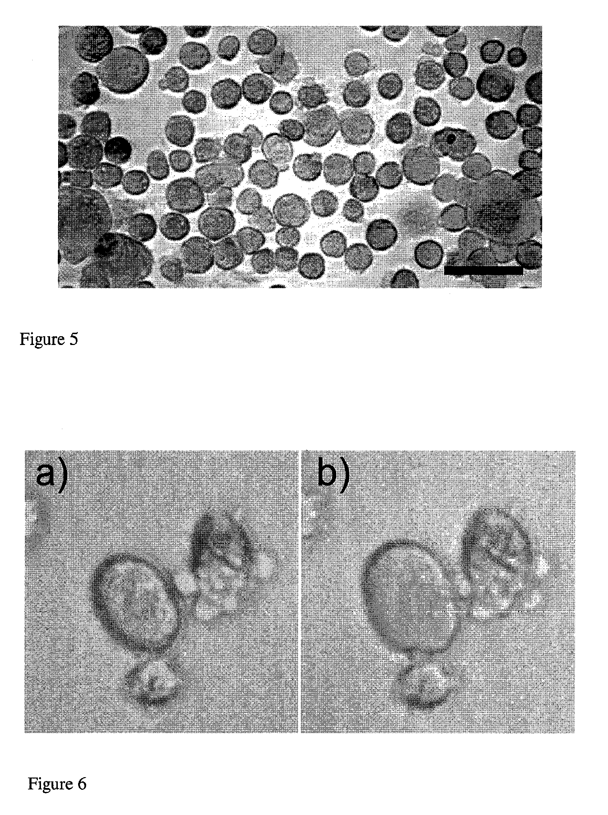

Figure 5: Image of a typical cell monolayer which is gently pressed between the two glass plates. The bar represents 50 μm.

Figure 6: A sequence of images showing the cells (a) after they have sedimented and (b) after they are gently pressed between the glass discs by lowering the top plate. Note that the diameter of the big cell increases as it is gently squashed. The gap between the plates is such that the smaller cells remain unperturbed

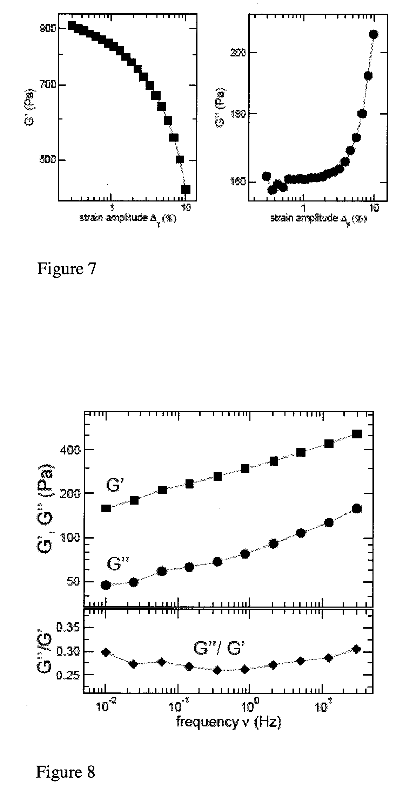

Figure 7: Amplitude sweep at a frequency ν =5 Hz. The storage modulus G' (left) and the loss modulus G" (right) are shown. Whereas G" shows a clear plateau below 3%, the storage modulus increases steadily as the amplitude is reduced up to 0.3%.

Figure 8: Shear moduli G' , G" (top plot) and loss tangent G"/G'(lower plot) as a function of frequency for a fixed amplitude Δγ = 2%.

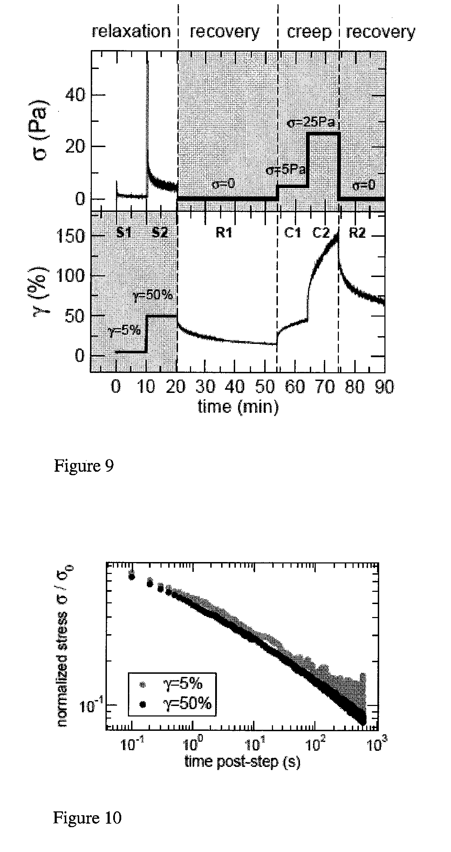

Figure 9: Stress relaxation, strain recovery, and creep measurements performed sequentially. The input step functions are shown as grey shaded areas. Small and large strain or stress steps are applied to explore and compare the linear and nonlinear responses.

Figure 10: Stress relaxation at constant strain for the two different strain steps shown in Fig. 8. The stress σ is divided by its value right after the step, $\sigma_0$, and shown as a function of the time elapsed after the strain step. Other than the prefactor, no significant differences can be observed between the two curves. The apparently larger scatter in the curve at γ = 5% is due to the normalisation by $\sigma_0$. The scatter in the stress σ is essentially constant throughout the experiment.

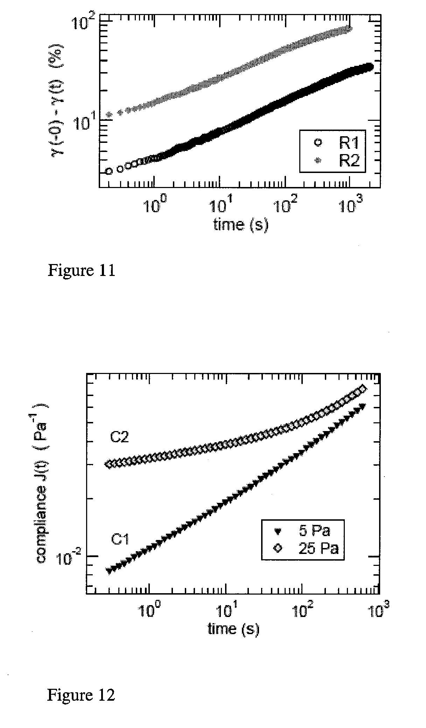

Figure 11: Strain recovery at zero stress obtained from the responses R1 and R2 in Fig. 8. The extent of recovery γ(-0) - γ(t) as a function of time are shown, where γ(-0) is the strain prior to theunloading

Figure 12: Creep compliances J(t) for experiments C1 (5 Pa) and C2 (25 Pa) in Fig. 8. The behaviour obtained at large stress and short timescales is significantly different from that at small stresses. Unlike in the relaxation and recovery experiments mentioned earlier, the curves cannot be collapsed by a simple scaling anymore

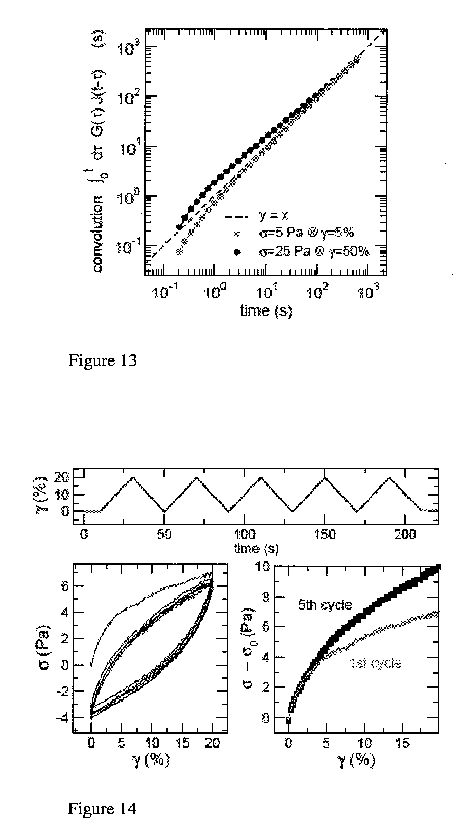

Figure 13: Comparison between the stress relaxation and creep responses from the experiment shown in Fig.

8 is performed by the convolution $\int_0^t d\tau G(\tau) J(t-\tau)$ of the conjugate response functions. Within linear response theory, the integral is identically equal to t. Grey symbols: convolution of G(t; 5%) with J(t; 5Pa). Black symbols: convolution of G(t; 50%) with J(t; 25Pa). Black dashed line: identity. Significant deviations from linear behaviour are seen only at short times. For times beyond 100 s the response approaches linearity, even for large step deformations of 50%.

Figure 14: Cell response to cyclic loading at a constant strain rate |γ| = $10^{-2}$ s$^{-1}$. Top: the input strain-time function. Lower left: stress-strain curves showing that the initial response evolves towards a steady state limit cycle within the first two to three cycles. Lower right: a comparison between the initial, virgin response (gray curve) and the 5th cycle (black curve) for small loading strains. The initial stress value has been subtracted for comparison purpose. Below ∼ 2%, cyclic loading does not significantly affect the response.

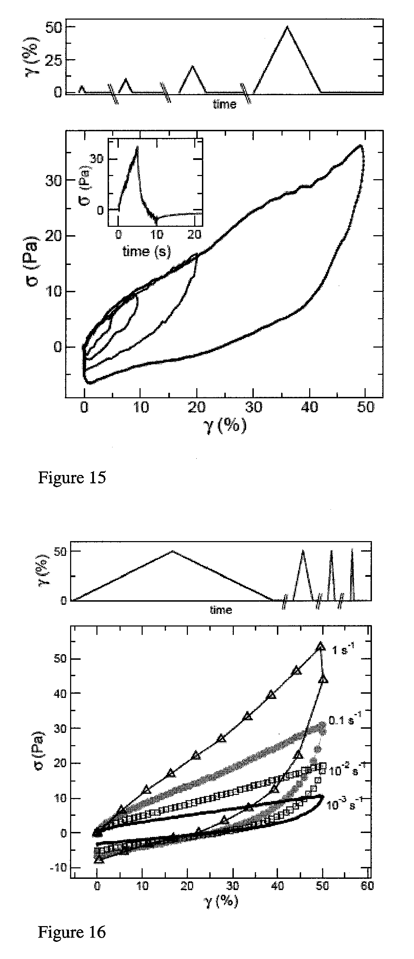

Figure 15: Cell responses to constant strain rate cycles at different amplitudes. Top: the strain rate |γ| is kept constant at 0.1 s$^{-1}$ and the amplitudes are increased in the sequence 5%, 10%, 20% and 50%. A rest time of 10 min. elapses between each loading to allow for stress relaxation. Bottom: Stress as a function of strain for different strain amplitudes. The stress-strain curve becomes linear after the initial loading or unloading. Note also that the initial response during unloading becomes stiffer at large amplitudes. Inset: Evolution and recovery of the stress during the first loading, unloading and rest.

Figure 16: Rate dependence obtained by applying single constant strain rate cycles with a 10 min rest time between cycles. Top: strain γ as a function of time. Bottom: stress-strain loops for the cycles shown above.

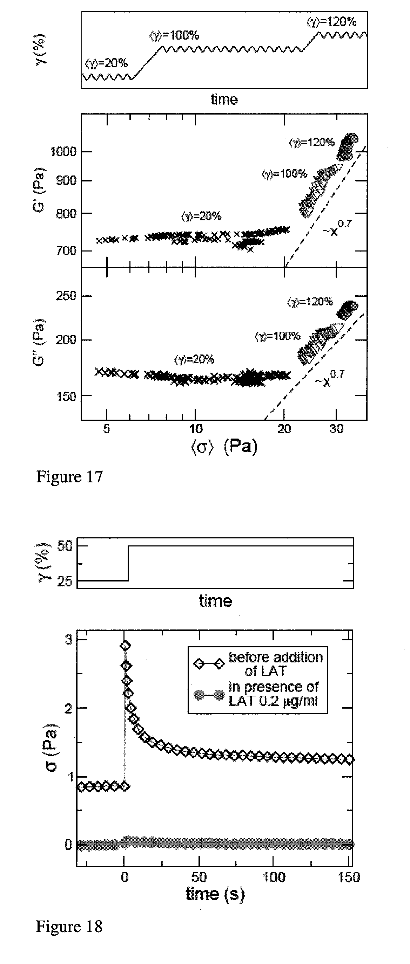

Figure 17: Top: a schematic of the imposed deformation history. Fast small amplitude oscillations at 5 Hz and 2% amplitude are superimposed over constant average strain values hi. Bottom The shear moduli G' and G" measured as a function of the average stress ⟨σ⟩ and strain ⟨γ⟩. A range of stress values are obtained during the stress relaxation which follows each strain step and are shown using different symbols. The dashed line corresponds to a - $\chi^{0.7}$ dependence

Figure 18: Top: The effect of actin depolymerisation is studied by applying a large step strain (25% to 50%) and measuring the stress relaxation. Bottom: Stress relaxation curves obtained from the same monolayer for normal cells and for cells treated with Latrunculin-A ( 0.2 $\mu$g/ml) to disrupt the actin network.

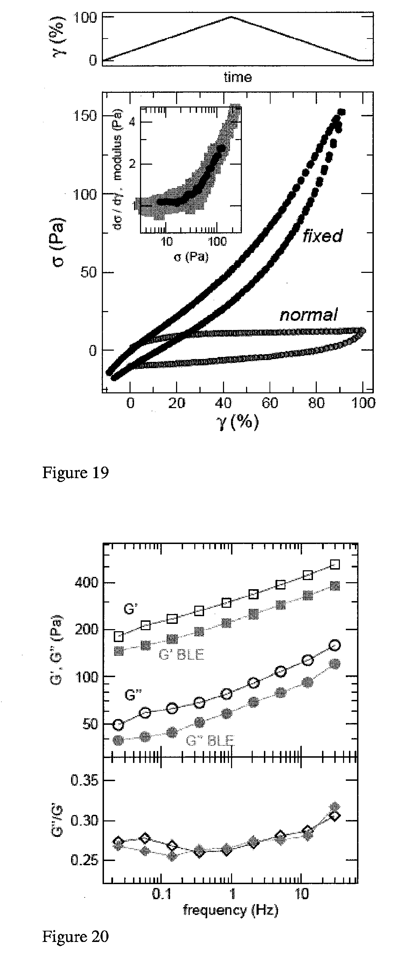

Figure 19: Top: Constant strain-rate experiments ($10^{-2}$ s$^{-1}$) are used to compare normal living cells to cells made passive (permanently crosslinked) using the fixing agent glutaraldehyde. Bottom Treated cells (black circles) show a stiffening behaviour rather than a flow behaviour as observed for the normal cells (grey circles). Moreover, the fixed cells reach stresses an order of magnitude larger than the non-treated ones. Inset: Comparison between the present data obtained from the fixed cells and that previously reported for fibroblasts using a single cell stretching technique [8]. Black circles are the numerical derivative $d\sigma/d\gamma$ as a function of stress $\sigma$ of the curve for fixed cells shown in the main plot and the gray symbols corresponds to the master-relation data modified from Ref. [8].

Figure 20: Frequency sweeps at an amplitude $\Delta_\gamma$ of 2%. The moduli and loss tangent obtained for normal cells (open symbols) and for cells exposed to 150 $\mu$M blebbistatin (solid symbols) are shown.

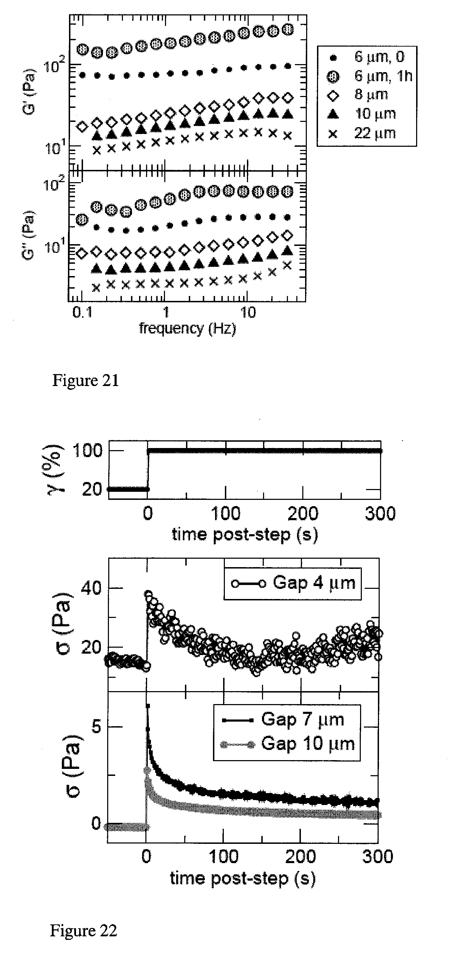

Figure 21: Frequency sweeps performed at different gaps. Storage modulus G' and loss modulus G" as a function of frequency are shown. During the first hour after the preparation of the monolayer, both moduli are seen to increase by a factor of two (black dots and grey circles). Subsequently increasing the gap from 6 $\mu$m to 22 $\mu$m decreases both moduli.

Figure 22: Effect of changing the separation between the plates on stress relaxation experiments. Top: Imposed strain as a function of time. A series of steps $\gamma$ : 0% $\rightarrow$ 20% $\rightarrow$ 100% is performed at different gap thickness values. Bottom: At 4 $\mu$m, the monolayer appears very stiff. Even though the data is noisy, an increase in stress can be observed after about 100 s. At larger gaps the stresses are about one order of magnitude lower and the data is much cleaner.

**Examples:**

I. GENERAL CONSIDERATIONS

I.1 Realizations of an apparatus for simple and precise measurement of biological cell mechanical properties in cell populations by cell monolayer shearing

In the following, we describe without loss of generality a realization of a device and protocol for measurement of cell mechanical properties by shear, which applies to cell collections of a relatively small number of cells down to single cell shear.

In this realization about 100.000 cells are sheared simultaneously. The device can, however, be made in different sizes and equipped with different detectors so that the number of cells sheared can be varied by many orders of magnitudes, if desired even down to a single cell.

    a) Realization of a device for assessment of the mechanical properties of small cell populations organized as a cell monolayer.

Fig. 1 is showing a schematic of a possible realization of the cell monolayer shearing apparatus. The optically flat glass plates are coated with specific cell adhesion promoting proteins. Small amplitude shear deformations are applied by an angular displacement of the top glass plate and the torque is measured to define the mechanical behavior. The objective and camera are used to verify the cell state, cell adhesion or measure the cell density.

I.1.1 Principle aspects of the measurement

For realization of the measurement device, we create a cell monolayer between two coaxial plates as depicted in fig. 1. A priori, achieving the adherence of a cell monolayer of isolated cells between two surfaces is far from trivial, for different reasons: the distance between the surfaces is limited to the cell thickness (of about 10 micrometers). The cells need to adhere to both surfaces equally well, but only within a ring at a well-defined distance to the rotating axis. However, the cells must not adhere to each other as this may degrade the measurement.

By using the device, unexpectedly, we find that the technique can be used on adherent as well as not perfectly adherent cells. Even after cell detachment by separating the plates the cells re-adhere sufficiently to give a comparable measurement. This is a considerable advantage over the cell stretching technique between two plates (described above), which is limited only to perfectly adhering cells. In a stretching technique, cells are lost once they loose adherence to one of the plates. The robustness of the measurement by shear may most likely be explained by the fact that shearing the cells between plates is found to stabilize cell adhesion when compared to cell stretching.

We describe a device and a protocol, which perform the measurement on a cell monolayer with great simplicity and accuracy. The measurement of cell mechanical properties does not demand any particular skills from the user.

I.1.2 Realization of a cell monolayer shearing apparatus

In the present realization, we use a driver/transducer, which can be a torsion measurement device or a transducer capable of measuring a rotational force as a function of the rotation angle (fig. 1) and capable of controlling the rotational angle at the same time. The surfaces are made of a suitable material, which needs to promote cell adhesion and have a sufficiently flat surface (roughness typically better than one micron). Without loss of generality we use glass, it can be made sufficiently flat and it can be coated with cell-adhesion promoting proteins. In our realization, the bottom glass plate is fixed. The top glass plate rotates and is used to measure both torque and normal force.

I.1.3 Incorporation of glass plates into the apparatus

In order to hold the glass plates in place, they are fixed to metal mounts. This can be done in multiple, well-known standardized ways. As an example the metal and glass plates can be glued together. This may be achieved using for instance with the UV-curable adhesive Vitralit 6129 (Panacol-Elosol GmbH). This is a thick adhesive with a very low thermal expansion coefficient of 36 ppm/K. The glue is cured by exposure for a few minutes to UV light with a wavelength of 365 nm and an intensity of 100 mW/(cm).

I.1.4 Achieving the required parallelism of the plates

A necessary condition is achieving the required parallelism between the two faces to which the cells stick simultaneously. The opposing faces must be parallel to each other within 1 micrometer/diameter. The parallelism can be checked by observing the white light interference fringes formed by illumination with a broad, distant light source (fringes of constant distance indicate parallelism). Also a broadened laser source can be used as exposed in optics textbooks.

In an industrialized version one may want to adjust the plates during production so that they can be inserted and have sufficient parallelism. Micron precise machining is standard. Often hard metal spheres or cylinders or plates (such as the control spheres or bearing points made by JVD, 95100 Argenteuil, France) serve to position workpieces precisely. Standard engineering techniques for micron precise positioning exist and do not need to be exposed here. They exist even for removable plates, which are repositioned for each measurement.

Another way to make the plates parallel is by providing three leveling screws to adjust the parallelism of the plates as a function of white light or laser light fringes. An example for the incorporation of micrometer screws for leveling is given in figure 1. We found that such a leveling mechanism is stable over long time periods without further adjustment even in cases where the apparatus is subject to temperature cycling.

More evolved mechanisms for automatically adjusting the parallelism can be found in maskaligners as they are used for lithography purposes in semiconductor production facilities. Such automatic devices ensure parallelism better than one micron - on small and even on large surfaces of several inches in diameter.

I.1.5 Coating the plates with cell-adhesion promoting molecules

Often arises the need to coat the plates with a protein or molecule layer in order for the cells to stick and develop tension. Often this layer is the fibronectin protein. Coating the plates can be done easily by putting a solution of protein onto the two plates. The concentrations are typically around 1mg/ml and may depend on the precise protein used. The solution is then rinsed with purfied water and the plates are left to dry. The solution can also be used as indicated in the protocol below, when the plates are already mounted to both upper and lower holder of the glass plates.

I.1.6 Cell adhesion at a defined distance to the rotational axis improves the measurement

In a circular, coaxial plate-plate geometry the deformation field is not uniform: the shear deformation increases proportional to the radius. The dominant contribution to the torque comes from the strongly sheared cells on the outer edge.

The situation can be improved as follows. On the top plate an inner circle with a depth of 100 micrometers is carved away ( for instance with an optical milling machine). Since the cells are at most 40 microns large, only those located on the outer, non-treated surface will be in contact with both plates and contribute to the measurement. The thickness of this outer ring must be large enough to achieve a good measurement given the sensitivity of the detector used.

I.1.7 Incorporation of isolated cells between the surfaces

Cells must be introduced between the weakly separated plates and they must adhere to both plates simultaneously while not forming aggregates.

+ Cell agitation (for instance by pipetting) avoids cell agglomeration as a general rule.

+ We found that capillary forces perform very well in introducing the cells.

When the plates are very small such as rectangular plates of cell size, separated by about cell size, then the cells are driven in the space between the plates by capillary forces and they adhere to both surfaces.

+ However, when many cells are to be introduced between plates, which are much larger than cell size, then the cell density in solution needs to be adjusted properly. When the cell suspension is supplied around the plates with a hole in the middle of one of the plates and the plates are dry, the cell suspension migrates between the plates by capillary forces. The plates need to be spaced a little more than a cell diameter.

+ A different way of putting the cells between the plates is by hydrodynamic forces where the cells are moved by a hydrodynamic flow between both plates, typically directed center-symmetrically with respect to the plates.

+We found that if the cells are placed in suspension on the lower plate and the upper plate is lowered after about 10 minutes (depending on the cell type and temperature) until the cells are slightly compressed (which can be observed with the camera), then the cells stick well to both plates. At the suitable concentration in solution the cells will be sufficiently spaced in order not to adhere to each other.

After introduction of the cells, the plates can be compressed until resistance from the cells is encountered, which can be detected by observation with a microscope equipped with a camera. The cells are found to adhere equally well to both plates.

I.1.8 Temperature Control

The temperature of the plates or the entire device needs to be controlled, it is favorable to keep the temperature a bit below body temperature, around 35°C for human cells. This can be performed by incorporating a commercial PID controller, a sensor and a heating resistance.

<u>I.2 Protocol of use of the cell monolayer shearing device</u>

1) As dust particles can be a problem during the measurement, the plates need to be cleaned. This can for instance be done with a proper tissue as it is used for cleaning optical surfaces.

2) The top glass plate is brought down until in contact with the bottom glass plate and the parallelism of the plates is controlled.

3) The plates are coated with an adhesion promoting protein brought between the plates. The protein solution is left between the plates during a suitable time. Then the top plate is brought down to push the solution out.

4) The cell suspension is introduced between the plates in the same fashion or any method discussed above.

5) The top plate is brought down. The cells are observed using a microscope to ensure sufficient density and a uniform distribution. The gap between the plates is reduced to slightly compress the cells. The compression appears through the microscope as an increase in the cells diameter. The cells are compressed for a suitable time period in order to stabilize the cells.

6) Rotating the plate allows one to estimate the number of cells adhering to both plates in conjunction with a camera (fig.1). The desired deformation is applied to the cell monolayer and the mechanical properties of the cells are investigated. The precise deformation imposed depends on the precise cell mechanical properties under study.

7) Samples can be changed by removing used cells with dissociation buffer (Trypsin) and sucking the used cells including the culture medium away through the outlet (figure 1). Fresh surface coating or cells can be introduced by following the steps described above.

8) For simplicity of use, the above steps can be automatized and the setup can be computer controlled. The user is left to clean the plates and apply the fluids (adhesion promoting protein solution and cell suspension).

I.2.1. Optional variation of the protocol

The cell suspension liquid can be changed so that cell specific drugs can be used to perturb the cells in a well-defined way. In this way the measurement with respect to well-defined biochemical components can be performed.

I.2.2. Variation of the cell monolayer shearing setup

One can use different geometries (such as a rectangular plate shape) and different sizes of the setup. The cell deformation can be uni- or multidirectional.

## II. EXPERIMENTAL RESULTS

### II. 1 Harmonic oscillation experiments

We begin our investigation by characterising the response of the cell monolayer to imposed sinusoidal strain oscillations. Our intention is to explore the extent of linearity of the response from this living system. We then study the frequency response of the system at small amplitudes.

II.1.1. Amplitude sweep

For strain amplitudes between 1% and 10% and a frequency of 1 Hz, increasing the strain amplitude results in a less and less elastic behaviour as shown in Fig. 7. The storage modulus goes roughly as G' - log(1 / $\Delta\gamma$), whereas the loss modulus G" becomes plateau-like for $\Delta\gamma$ < 3%. Thus, a linear regime in a strict sense does not exist in this measurement range.

II.1.2. Frequency sweep

Figure 8 shows a frequency sweep data obtained at an amplitude of 2%. Both G' and G" show a power-law behaviour throughout the studied range. The loss tangent remains approximately constant as shown. The power-law behaviour observed here is in excellent agreement with that previously reported using microrheology and single cell techniques [4, 6]. The curves for G' and G" remain almost parallel throughout the studied frequency range.

### II.2 Stress relaxation, recovery and creep experiments

As cells are complex living materials which can actively respond to different types of mechanical stimuli, we now proceed to investigate their response to stepwise loading by performing relaxation and creep experiments. The two types of step loading experiments are then compared to study the linear and nonlinear cell response that may arise.
For comparing the relaxation and creep compliance of the cells we have devised the protocol shown in Fig. 9. First, we impose a 5% step strain and measure stress relaxation during 10 min (S 1 in Fig. 9). Then, a large step from $\gamma$ = 5 to $\gamma$ = 50% is applied and a second relaxation curve is measured (S2). After 10 min at 50% strain, the monolayer is unloaded in a stepwise fashion and the stress kept at zero for 20 min in order to measure strain recovery (R1). Next we perform two subsequent creep experiments, the first one at a low stress of 5 Pa (C1) and the second one at a high stress of 25 Pa (C2). The stress values are chosen from the previous relaxation experiments so that S1 can be compared with C1, and S2 with C2. Finally, a second full unloading to $\sigma$ = 0 is performed (R2). The whole procedure takes about 90 min, which is a reasonable time for a measurement at 25°C. S 1 and C1 are expected to be close to a linear regime, while the large steps S2 and C2 should reveal effects of strong nonlinearities. The different responses are discussed and compared below.

II.2.1. Stress-relaxation

Figure 10 shows stress relaxation curves obtained at constant strain, after a 0% → 5% and a 5% → 50% strain step. As expected from the frequency sweeps discussed earlier, the relaxation cannot be described by a single exponential and is close to a power-law. Remarkably, no significant nonlinearity is observed as a function of the applied strain amplitude. Normalising by the initial values suffices to collapse the curves.

II.2.2. Strain recovery at zero stress

After a deformation and subsequent unloading to zero stress, do irreversible strains remain? To decide on this we perform the following experiment. After imposing a 50% shear for 10 min, the stress $\sigma$ is taken to zero and the time evolution of the strain $\gamma$ is recorded (R1 in Fig. 9). Figure 11 shows the extent of recovery $\gamma$(-0) - $\gamma$(t), where the strain prior to the unloading is subtracted. In the first recovery experiment, R1, the strain recovers from 50% to 20% in a 2000 s time period and is still slowly recovering. At this pace, a full recovery would require many hours. The question seems deemed to remain unanswered, and not only for technical reasons; the time for complete strain recovery is close to typical cell lifetimes of $\sim 10^4$ s.

II.2.3. Creep experiments

Figure 12 shows the compliances from the creep experiments C1 and C2. The compliance functions are defined as J(t) = (γ(t) - γ(-0))/(σ - σ(-0)), where γ(-0) is the deformation prior to the stress step, _ the imposed constant stress during creep, and σ(-0) the stress prior to the step. Experiment C2, performed at a large stress of σ = 25 Pa, gives a significantly larger compliance for times shorter than 100 s. Remarkably, at longer times it approaches the small-stress compliance.

II.2.4. Convolution of the relaxation modulus and compliance

We now compare the responses obtained from the relaxation and creep experiments, to assess the linearity of the response. Linear behaviour is given by Boltzmann's superposition principle: the stress is a linear functional of the strain history,

$$\sigma(t) = \int\limits_0^\infty d\tau G(\tau)\dot{\gamma}(t-\tau),$$

where the function G(t) is the relaxation modulus [15]. It is straightforward to show that

$$t = \int\limits_0^t d\tau G(\tau)J(t-\tau), \tag{1}$$

holds [15]. With this convolution relation one may decide whether the material behaves as a passive, linear system.

We proceed as follows. The relaxation moduli are obtained from the relaxation experiments S1 and S2 as G (t) = σ(t)/(γ - γ(-0) ), where γ is the imposed constant strain and γ(-0) is the strain prior to the strain step. We numerically convolute the measured relaxation moduli with the creep compliances to assess the validity of Eq. 1. The advantage of the procedure is that we work directly with the measured response functions, instead of *ad hoc* choosing a fitting function.

We convolute G(t) from S1 with J(t) from C1 which corresponds to the small stress regime, and G(t) from S2 with J(t) from C2 for the large stress regime as shown in Fig. 13. Both convolutions deviate significantly from the linear behaviour at short times. For intermediate times of $\sim 10$ s the small-stress convolution approaches identity. The large-stress convolution shows nonlinear behaviour at these intermediate times, but becomes a linear response for times in the range 100-1000 s. Thus, the initially nonlinear behaviour becomes linear at long times.

II.3 Cyclic loading

For a complex living system it is not clear how the probing method itself may affect the response of the system. Cyclic experiments allow us to explore the evolution of the complex system under a given loading condition. Furthermore, constant rate cyclic loading experiments are well suited for investigating the cell responses to different deformation rates and amplitudes independently.

II.3.1. Existence of a limit cycle

We subject the cells to repeated loading-unloading cycles at a constant strain rate. As can be seen in Fig. 14, after the first couple of cycles, the monolayer approaches a limit cycle with very little variation from cycle to cycle.
As seen in Fig. 14, the limit cycle has a higher asymptotic slope than the virgin curve (first cycle). A close comparison between the first and the limit cycle (Fig. 14, Bottom Right) shows that the response is not affected below 2% strain. Beyond 5%, the overall slope is larger for the limit cycle. This effect of continuous cyclic loading on the shape of the stress-strain loops is a very robust feature of the fibroblast monolayer and the same behaviour is observed at the single cell level [16].
The effects of a cyclic straining are reversible. When the cells are maintained at zero strain for more than 10 min and the experiment repeated, the new virgin curve and the limit cycle are quantitatively similar to the previous ones (data not shown).

## II.3.2. Amplitude dependence

Figure 15 shows single loading/unloading cycles with different amplitudes. A rest time of 10 min elapses between each cycle, which ensures a sufficient stress relaxation. The stress-strain curves share a common envelope. This indicates that the rest time sufficed to recover the virgin state. The slope $d\sigma/d\gamma$ reaches a roughly constant value after the initial - 10% strain. For small amplitudes the unloading response is very similar to the loading response, essentially a point inversion of the latter. As the amplitude is increased, the unloading response changes its shape noticeably. When unloading, again a linear stress-strain relation is obtained as the strain is lowered from its peak value.

## II.3.3. Rate dependence

We perform single cycles at different rates, waiting 10 min between each cycle. Changing the rate changes the overall slope of the curves, as can be seen from Fig. 16. The hysteresis loops are also seen to become wider.

## II.4 Effect of the average stress on the viscoelastic moduli

In earlier sections we have performed a detailed characterisation of the cell response to oscillatory and cyclic ramp experiments by varying either the deformation rate or the amplitude. These experiments were performed on cells which were at an initial state where the stress and strain are almost completely relaxed. It is interesting, however, to investigate how the cell rheological properties are modified when the cells are under a non-zero stress or strain condition.
For this we perform the following experiment. Starting from a zero stress, zero strain condition, we apply a fast strain step to the cells. The average strain then maintained constant while a small amplitude strain oscillation (2% and 5 Hz) is superimposed; $\gamma(t) = \langle\gamma\rangle + \Delta_\gamma e^{i\omega t}$. After the strain step the average cell stress will relax with time as $\sigma(t) = \langle\sigma\rangle(t) + \Delta_\sigma(t) e^{i\omega t}$. In this way, by applying different strain steps, the moduli can be measured for a large range of stress or strain values. The procedure, though unusual for passive materials, has proved successful to study stiffening responses in bio mechanics [17]. The results are shown in Fig. 17. It can be seen that both moduli, G' and G", stiffen as a function of the average stress above a threshold stress. *i.e.*, G' = G'($\langle\sigma\rangle$) and G" = G"($\langle\sigma\rangle$) above the threshold. In particular, stiffening can be observed during stress relaxation at a constant strain for $\langle\gamma\rangle$ = 100% and $\langle\gamma\rangle$ = 120%. Above the threshold, both moduli follow a power-law with an exponent of about 0.7.

## II.5 Drug experiments

After characterising the normal fibroblasts we now discuss a series of experiments aimed at investigating the role of different cytoskeletal elements like actin filaments and myosin motor proteins in the mechanical responses detailed above. Moreover, we perform, for the first time, experiments demonstrating major qualitative differences between the mechanical responses of an active, living cell to a cell which is made passive, permanently crosslinked.

## II.5.1. Actin depolymerisation

In order to investigate the contribution of the actin network in the cells to the mechanical properties mentioned above, we treated the cells with an actin filament depolymerising drug Latrunculin-A [18]. For this, we first characterised the normal cells by performing step-strain experiments and then introduced the drug at a final concentration of 0.2 $\mu$g/ml without mechanically perturbing the cells using the method discussed in section II E. We observe that a 10 min. exposure to the drug at 25°C induces a marked transition from a viscoelastic-solid like behaviour observed before treatment to an almost liquid like behaviour as shown in Fig. 18. For a given shear, the stresses are two orders of magnitude smaller, barely resolvable by the rheometer.

## II.5.2. Comparison of living and 'fixed' cells

Due to the active nature of the cytoskeleton, it is interesting to try and elucidate the contributions from the dynamical factors to the mechanical responses mentioned above for normal cells. With this in mind we attempted generating purely passive cells (or dead, equilibrium system) by exposing the cells to a fixation agent Glutaraldehyde. This process binds the network in such a way that all dynamical processes like filament polymerisation-depolymerisation, kinetics of motors and crosslinking proteins, etc are arrested, though preserving the cytoskeletal structure [19].
As can be seen from Fig. 19, the typical mechanical behaviour of normal cells is dramatically altered after fixation of the cells by a 10 min. exposure to a 0.1% glutaraldehyde solution. Most notably, the linear behaviour at large ampli-tudes is completely abolished by the treatment. The response of the passive, fixed cells approaches that of a stiffening elastic material, with a positive curvature $d^2\sigma/d\gamma^2$. This change in sign of the curvature after glutaraldehyde fixation can also be obtained with single cell experiments [10].

The dramatic effect of glutaraldehyde is restricted to a large deformation. Below 2% strain it does not affect the response significantly. Thus, the shear modulus of the monolayer does not change substantially, indicating that the effect of glutaraldeyde is limited to altering the flow properties of the material. For a further confirmation of this idea we compare the numerical derivative $d\sigma/d\gamma$ of the stress-strain relation obtained after fixation with previous results on single cells (see Fig. 19 (inset)). The numerical derivative as a function of stress is very similar to the stiffening master-relation described in Ref. [8]. Both slope $d\sigma/d\gamma$ and stretch moduli are constant for small deformations, and stiffen beyond 20% strain. This agreement conclusively proves that the stiffening response is independent of any biological processes such as e.g. signalling, restructuring, crosslink-dynamics or motor activity.

II.5.3. Inhibition of myosin-II motors

The glutaraldehyde experiments described in the previous section shows that the cell response is drastically altered when the cells aremade passive or dead with fixed crosslinks and filaments. However, it is not clear as to what extent the dynamics of motor molecules are involved in controlling cell mechanical properties. A separate experiment is required to explore this aspect.

In order to assess the role of myosin-II motors on cell mechanics, we inhibit them using the specific drug Blebbistatin [20, 21]. Ramp experiments, like the one discussed in the previous section, do not reveal any qualitative differences compared to normal cells (data not shown). We still observe a linear stress-strain relation after the initial loading or unloading, although the moduli G' and G" are slightly lower compared to normal cells. Previously reported microrheology experiments have shown a qualitative difference in the frequency response obtained from blebbistatin treated cells [5]. In order to compare our results with this report we performed frequency sweeps using the present technique and obtained the results shown in Fig. 20.

As a control, we perform an amplitude sweep and frequency sweep on the untreated cell monolayer. We then add the drug at a final concentration of 150 micromolar to the cells. After a waiting time of 10 min the amplitude sweep and frequency sweep is repeated. No significant difference is observed in any of the two experiments, aside from a prefactor. To rule out the possibility of the drug not working, we tested its effect on arresting the oscillatory dynamics of freely suspended fibroblasts [22].

III. DISCUSSION

III. 1 Summary of experimental results

The Cell Monolayer Rheology technique is a very versatile method for probing the complex rheological properties of cells. Linear viscoelastic properties, nonlinear responses which arise under different loading conditions, temporal variations, and plastic flow properties are all accessible using this method. In the past, rheological investigations on collections of living cells often addressed cells inside a protein matrix, such as collagen gels [23, 24]. Interpretation of the data obtained in this way is difficult, as the extracellular matrix itself has mechanical properties very similar to those of cells. In our case, the external medium is a Newtonian liquid with a negligible viscosity. Another approach are sedimented cell pellets [25]. Our cell monolayer technique has the advantage of a clean geometry where cells are mechanically independent from each other. Therefore, each measurement gives an arithmetic mean over $\sim 10^6$ cells, making the experimental results highly reproducible and easy to perform compared to single cell techniques. Functionalising the plates using adhesion promoting proteins allows the cells to form specific cell-substrate adhesion, at the same time maintaining a simple overall cell geometry when compared to spread cells used in microrheology studies. As we demonstrate, the role of different cytoskeletal components and the comparison between active and passivated cells can also be performed using biochemical techniques, without mechanically perturbing the cell monolayer. Incidentally, the results obtained do depend on the gap between the plates. An optimum gap is chosen for the experiments so that the cells are not too strongly compressed (see Appendix).

Harmonic oscillation experiments clearly show that a strict linear regime does not exist for the storage modulus G' even at the smallest strain amplitude of about 0.2%, at a frequency of 5 Hz (Fig. 7). An amplitude range of 0.2%-2% may be considered approximately linear. The frequency sweep in this approximately linear regime (Fig. 8) exhibits a clear power-law increase of both G' and G" over three decades of frequency (10-2 Hz-30 Hz). Moreover, the G' and G" curves remain parallel throughout the frequency range. There is no crossover from an elastic to viscous behaviour.

Relaxation, creep and recovery experiments performed by applying step strains and step stresses, respectively, reveal the existence of a continuum of relaxation times in the system (Fig. 10). The stress relaxation continues even at the longest observation times (10 min). The relaxation spectra obtained at different loading strains are different only by a constant scaling factor (Fig. 10). Creep as well as strain recovery experiments (Fig. 9 and 12) too show long time recovery effects (> 20 min). Convolution of relaxation moduli and creep compliances shows that initially nonlinear responses become linear after a certain time, which amounts to 100 s for experiments performed at $\sim$ 100% strain (Fig. 13).

Cyclic loading experiments show an evolution of the initial response towards a steady state "limit cycle" (Fig. 14). When a rest time of 10 min is allowed the system recovers the initial "virgin response". This can be observed for different loading rates. Varying the strain amplitude reveals a surprising feature of the cell response. The response which is nonlinear at small strains becomes almost perfectly linear as the strain increases (Fig. 15). This entry to linearity at large amplitudes is observed for the studied strain rates of $10^{-3}$ s$^{-1}$ to 1 s$^{-1}$ (Fig. 16). On reversing the sense of strain rate (unloading) the cells again exhibit an initial nonlinear response and a later linear response. Within the explored range, with increasing strain rate the linear modulus and the hysteresis increase.

The viscoelastic moduli as a function of stress show a power-law stiffening response above a threshold stress (Fig. 17). Both moduli stiffen as a function of stress with a very similar power-law exponent. The threshold stress values are also similar for both moduli.

Drug experiments reveal the following. When actin filaments are depolymerised, the cells are transformed from viscoelastic objects to almost purely viscous ones. When the cell cytoskeleton is permanently crosslinked using a fixation agent, the large amplitude linear response is replaced by a strong stiffening response. Inhibiting myosin motor molecules, on the other hand, does not produce any qualitative change in the rheological behaviour of the cells.

III.2 Comparison of different results

In this section we compare the different results discussed above in order to reveal some general trends in fibroblast cell mechanics and compare them with the recent literature.

Cell response timescales: The frequency scan performed using small amplitudes harmonic oscillations (Fig. 8) is in excellent agreement with the relaxation spectra obtained from the step strain experiments (Fig. 10). Both experiments show that there exists a continuum of relaxation times in the system. The relaxation continues to happen even at the longest observation times. Power-law relaxation spectra have been observed for a variety of cell types using microrheology and AFM techniques [3, 4, 26, 27]. This, apart from validating the CMR technique, shows that the collective response of 106 cells is indeed comparable to single cell responses obtained under different conditions. Recovery spectra recorded at zero stress gives a similar picture for the timescales involved (Fig. 11), with the strain recovery continuing even at long times (> 20 min.).

Constant strain rate experiments performed at different loading rates show an increase in the slope of the stress-strain relation with increasing rate (Fig. 16). This is expected for viscoelastic materials, and can in principle be understood in terms of linear viscoelasticity.

Linear and nonlinear regimes: The stress relaxation curves recorded at different strains and recovery recorded at different initial strain values collapse to the same curve on normalisation using the respective initial values. Thus, these responses are independent of the initial loading condition, as expected for a linear regime. In the case of creep experiments, at large stresses a qualitatively different response is observed (see Fig. 12). However, as the convolution of compliance and relaxation modulus conclusively shows, the cell monolayer asymptotically becomes a linear, passive system for times longer than $\sim$ 100 s. This is even more remarkable as the strains involved are of the order of 100%.

Another counterintuitive behaviour is observed in cyclic constant-rate loading experiments (Fig. 15 and Fig. 16). The response which is nonlinear at small strains becomes almost perfectly linear at large strains. On reversing the sense of deformation, the response is nonlinear at large strains and becomes almost linear at lower strain values. These effects are more clearly seen at lower strain rates (Fig. 16). Thus, the initial response of the cells to large constant rate straining is nonlinear and there is a crossover to linear behaviour as the straining is continued. This observation is very similar to that observed in single cells using the microplate stretching technique [10, 16].

Stress stiffening: Harmonic oscillation experiments performed on cells under nonzero average stress show a power-law stiffening response for both G' and G" as a function of the average stress (Fig. 17). This strain independent stress-stiffening observed in our monolayer shearing experiment is remarkably similar to that previously observed in single cell stretching experiments [8]. Similar stiffening responses have also been reported for tissues [17]. Unlike the increase in the modulus as a function of rate observed in Fig. 16, this stiffening is a nonlinear effect. When the cell cytoskeleton is made permanent using a fixing agent, the cell exhibits a stiffening response over a very wide amplitude range replacing the linear stress-strain relation observed in normal cells (Fig. 19 (inset)).

Correlation between G' and G": It is also interesting to compare the correlation in the behaviour of the two moduli G' and G" in the different experiments. In frequency scans, both moduli increase with frequency with very similar power-law exponents for the entire range of frequencies (Fig. 8). The loss tangent remains almost constant as previously reported using other techniques [4, 27]. Such a strongly correlated behaviour is even more striking in the stress-stiffening response (Fig. 17). Here, the crossover threshold as well as the exponent for the power-law stiffening response are very much comparable for both moduli. However, in experiments probing the frequency response of single cells in suspension using an optical stretcher technique, a crossover from elastic to viscous behaviour is observed as the frequency is reduced [28]. Presumably this reflects the differences in boundary conditions, which should lead to different cytoskeletal structures.

Comparison of normal cells and biochemically modified cells: Depolymerisation of actin filaments causes the cells to lose their elastic properties almost completely (Fig. 18). This transformation clearly shows that, at an optimum gap (see Appendix), we are indeed probing the mechanical responses of the actin cytoskeleton in the cells. Any contribution coming from microtubules, intermediate filaments or the nucleus are negligibly small. Large amplitude, constant rate loading experiments performed on normal living cells and cells with fixed cytoskeleton (permanent crosslink and filament structure) produce completely different cell responses (Fig. 19). The linear regime which is clearly observed in normal cells for a wide range of loading rates is replaced by a stiffening response in fixed cells. This experiment conclusively proves that dynamic crosslinks, or filaments are necessary for the large amplitude responses exhibited by normal cells. Motor proteins, which also form a class of dynamic crosslinks with the ability to generate active forces and relative motion between filaments, do not appear to play a prominent role in the studied responses as discussed in the text. A comparison of the frequency sweeps on normal cells and that performed on cells with inhibited myosin motors shows only a slight reduction in both G' as well as G" upon drug treatment, while retaining the qualitative features of the normal cell response (Fig. 20). This result, which we obtain by shearing a cell monolayer, is qualitatively different from microrheology experiments performed using optical tweezers on single cells [5]. In the latter case the loss modulus G" becomes independent of frequency when myosin motors are inhibited.

III.3 Conclusions and speculations

Taken together, our results lead to the following picture of cell mechanics. The actin cytoskeleton defines cell mechanical behaviour via an interplay between nonlinear elastic behaviour and linear inelastic behaviour. At short timescales, crosslinks stick and the network responds elastically. Due to its nonlinear elastic properties, it stiffens at a large average stress. This stiffening response is by now well established as a general feature of biopolymer networks [3, 17, 29], and can even be observed *in vitro* in crosslinked actin networks [30]. Proposed explanations range from entropic stretching [30, 31] to enthalpic bending [8, 32, 33]. If the stress is further increased, the extent of linear inelastic flow increases dramatically in a non-Newtonian fashion. The microscopic mechanism for this inelastic response is most likely crosslink slippage, but may also involve filament growth. The inelastic flow regime goes hand in hand with a remarkably linear stress-strain relation. Such a behaviour is by no means unique to biological cells: under the name of kinematic hardening [34], it is commonly observed in composite alloys [35, 36], as well as in rubbery polymers [37] and granular materials [38]. Microscopic understanding of this hardening response may well be a crucial step for the further development of cell mechanics.

Living cells may respond to the sudden mechanical stimulus by undergoing a transient reoganisation of its internal structure. Subsequently, since the input is kept constant after the initial stimulus, the system could evolve towards a "steady state organization" with time. This may explain why a strict linear regime is elusive in the amplitude sweeps (even at about 0.1 % strain), where the cell is under continuous mechanical perturbation.

IV. APPENDIX: Effect of gap thickness

Changing the distance between plates has an effect on the monolayer response. We study this by means of oscillatory and stress relaxation experiments. Because of this gapdependence, the experimental protocol should always begin with a gap-optimisation.

IV.1 Frequency sweep at 1% amplitude

Figure 21 shows a set of frequency sweeps performed at a strain amplitude $\Delta\gamma$ =1%, starting from an the initial gap of 6 $\mu$m. A weak dependence of G' with frequency can be seen. When measurements are performed as soon as the monolayer is loaded between the plates and again after one hour, both G" as well as G' increase by about a factor of two. This ay be attributed to cytoskeletal restructuring which is expected to occur as the cells develop focal adhesion complexes with the fibronectin coated plates. Similar effects can be observed on single-cell experiments [27]. Increasing the gap from the initial 6 $\mu$m to 22 $\mu$m lowers both moduli by over a decade, though their frequency dependence is not significantly affected. This effect is most likely due to a decrease in the number of cells contacting both plates.

IV.2 Step strain and stress relaxation

Stress relaxation experiments performed at different gaps agree with the results shown above. The monolayer is much stiffer at smaller gaps (see Fig. 22). As discussed earlier, this effect is most likely due to a larger number of cells contributing to the measurement. At very small gaps (about 4 $\mu$m), the data becomes noisy and the relaxation curve behaves in an unconventional way. The stress is seen to increase about 100 s after applying the step strain. At 4 $\mu$m, the cells are strongly compressed and the nucleus too is expected to be under compression.

References:

[1] B. Alberts, D. Bray, J. Lewis, M. Raff, K. Roberts, and J. D. Watson. Molecular Biology of the Cell. Garland Publishing, Inc., New York, 3rd edition, 1994.

[2] D. Bray. Cell Movements : from molecules to motility. Garland Publishing, Inc., New York, 2nd edition, 2001.

[3] P. Pullarkat, P. Fernandez, and A. Ott. Rheological properties of the eukaryotic cell cytoskeleton. Physics Reports (doi: 10.1016/j.physrep.2007.03.002), 2007.

[4] B. Fabry, G. N. Maksym, J. P. Butler, M. Glogauer, D. Navajas, and J. J. Fredberg. Scaling the microrheology of living cells. Phys. Rev. Lett., 87(14):148102, 2001.

[5] M. Balland, A. Richert, and F. Gallet. The dissipative contribution of myosin ii in the cytoskeleton dynamics of myoblasts. Eur. Biophys. J., 34:255-261, 2005.

[6] N. Desprat, A. Richert, J. Simeon, and A. Asnacios. Creep function of a single living cell. Biophys. J., 88:2224-2233, 2005.

[7] H.H. Winter and F. Chambon. Analysis of linear viscoelasticity of a crosslinking polymer at the gel point. J. Rheology, 30(2):367-382, 1986.

[8] P. A. Fern'andez, P. A. Pullarkat, and A. Ott. A master relation defines the nonlinear viscoelasticity of single fibroblasts. Biophys. J., 90(9):3796-3805, 2006.

[9] F. Wottawah, S. Schinkinger, B. Lincoln, R. Ananthakrishnan, M. Romeyke, J. Guck, and J. K¨as. Optical rheology of biological cells. Phys.Rev.Lett., 94:098103, 2005.

[10] P. A. Fern'andez and A. Ott. Single fibroblast viscoplasticity: stress stiffening and kinematic hardening. in preparation, 2007.

[11] E. Hecht and A. Zajac. Optics. Addison-Wesley, 3rd edition, 1974.

[12] G. J. Todaro and H. Green. Quantitative studies of the growth of mouse embryo cells in culture and their development into established lines. J. Cell. Biol., 17:299-313, 1963.

[13] G. J. Todaro, K. Habel, and H. Green. Antigenic and cultural properties of cells doubly transformed by polyoma virus and sv40. Virology, 27:179-185, 1965.

[14] H. G. Drexler, W. Dirks, W. R. A. F. MacLeod, H. Quentmeier, K. G. Steube, and C. C. Uphoff. DSMZ Catalogue of Human and Animal Cell Lines. Braunschweig, 2001.

[15] A. C. Pipkin. Lectures on viscoelasticity theory. Springer, New York, 1 edition, 1972.

[16] P.A. Fern'andez. Mechanics of living cells: nonlinear viscoelasticity of single fibroblasts and shape instabilities in axons. PhD thesis, Universit¨at Bayreuth, 2006.

[17] Y. C. Fung. Biomechanics: Mechanical properties of living tissues. Springer Verlag, New York, 1993.

[18] I. Spector, N. R. Shochet, Y. Kashman, and A. Groweiss. Latrunculins: novel marine toxins that disrupt microfilament organization in cultured cells. Science, 219:493-495, 1983.

[19] J. V. Small, K. Rottner, P. Hahne, and K. I. Anderson. Visualising the actin cytoskeleton. Microsc.Res.Tech., 47:3-17, 1999.

[20] A. F. Straight, A. Cheung, J. Limouze, I. Chen, N. J.Westwood, J. R. Sellers, and T. J. Mitchison. Dissecting temporal and spatial control of cytokinesis with a Myosin II inhibitor. Science, 299:1743-1747, 2003.

[21] M. Kov'acs, J. T'oth, C. Het'enyi, A.M'aln'asi-Csizmadia, and J.R. Sellers. Mechanism of Blebbistatin inhibition of Myosin II. J. Biol. Chem., 279(34):35557-35563, 2004.

[22] G. Salbreux, J. F. Joanny, J. Prost, and P. A. Pullarkat. Shape oscillations of non-adhering fibroblast cells. to be published. See also: P.A.Pullarkat (2006), arXiv:physics.bio-ph/0612156.

[23] K. Obara, K. Nobe, H. Nobe, M. S. Kolodney, P. de Lanerolle, and R. J. Paul. Effects of microtubules and microfilaments on [Ca2+]i and contractility in a reconstituted fibroblast fiber. Am. J. Physiol. Cell Physiol., 279:C785-C796, 2000.

[24] T. Wakatsuki, M. S. Kolodney, G. I. Zahalak, and E. L. Elson. Cell mechanics studied by a reconstituted model tissue. Biophys. J., 79:2353-2368, 2000.

[25] L. Eichinger, B. Koppel, A.A. Noegel, M. Schleicher, M. Schliwa, K. Weijer, W. Witke, and P.A. Janmey. Mechanical perturbation elicits a phenotypic difference between dictyostelium wild-type cells and cytoskeletal mutants. Biophys.J., 70(2):1054-1060, 1996.

[26] G. Lenormand, E. Millet, B. Fabry, J. P. Butler, and J. J. Fredberg. Linearity and time-scale invariance of the creep function in living cells. J.R.Soc.Lond.Interface, 2004.

[27] B. A. Smith, B. Tolloczko, J. G. Martin, and P. Gr¨utter. Probing the viscoelastic behavior of cultured airway smooth muscle cells with atomic force microscopy: stiffening induced by contractile agonist. Biophys. J., doi: 10.1529/biophysj.104.046649, 2005.

[28] J. Guck, R. Ananthakrishnan, H. Mahmood, T. J. Moon, C. Casey Cunningham, and J. K"as. The optical stretcher: a novel laser tool to micromanipulate cells. Biophys.J., 81:767-784,2001.

[29] A. R. Bausch and K. Kroy. A bottom-up approach to cell mechanics. Nature Physics, 2:231-238, 2006.

[30] C. Storm, J. J. Pastore, F. C. MacKintosh, T. C. Lubensky, and P. A. Janmey. Nonlinear elasticity in biological gels. Nature, 435:191-194, 2005.

[31] E. Kuhl, A. Menzel, K. Garikipati, E.M. Arruda, and K. Grosh. Modeling and simulation of remodeling in soft biological tissues. In G.A. Holzapfel and R.W. Ogden, editors, Mechanics of biological tissue, pages 77-89, Berlin, 2006. Springer-Verlag.

[32] C. Heussinger and E. Frey. Floppy modes and non-affine deformations in random fiber networks. Phys. Rev. Lett., 2006.

[33] P. R. Onck, T. Koeman, T. van Dillen, and E. van der Giessen. Alternative explanation of stiffening in cross-linked semiflexible networks. Phys.Rev.Lett., 95:178102, 2005.

[34] W. Prager and H. Geiringer. Mechanik isotroper körper im plastischen zustand. Ergebnisse der exakten Naturwissenschaften, 13, 1934.

[35] U. F. Kocks. Constitutive behavior based on crystal plasticity. In A.K.Miller, editor, Unified constitutive equations for creep and plasticity, pages 1-88, Essex, 1987. Elsevier applied sciences.

[36] D. C. Stouffer and L. Thomas Dame. Inelastic deformation of metals. Models, mechanical properties, and metallurgy. John Wiley, Inc., New York, 1st edition, 1996.

[37] P. Haupt. Continuum mechanics and theory of materials. Springer, Berlin, 2nd edition, 2002.

[38] S. Nemat-Nasser. Plasticity: A Treatise on Finite Deformation of Heterogeneous Inelastic Materials. Cambridge University Press, 2004.

**List of reference signs**

| | |
|---|---|
| 1 | device |
| 2 | plate |
| 3 | plate |
| 4 | shaft |
| 5 | actuator |
| 6 | support |
| 7 | support |
| 8 | gap |
| 9 | axis of rotation |
| 11 | screw |
| 12 | screw |
| 13 | hole |
| 14 | cell monolayer |
| 14a | cell |
| 15 | pipe |
| 16 | transducer |
| 17 | objective |
| 21 | camera |
| 22 | controller |
| 23 | circular recess |
| 24 | ring |
| 25 | elevated surface |
| 26 | bottom |
| 27 | surface |

**Claims**

1. A method for determining the mechanical properties of cells (14a), comprising:

   a) providing a biological cell sample to be tested;
   b) forming the cell sample to a cell monolayer (14);

c) applying shear stress and/or shear deformation to said cell monolayer (14); and

d) measuring the mechanical response of said cell monolayer (14).

2. The method of claim 1, wherein the cell sample is an animal or human cell sample.

3. The method of claim 1 or 2, wherein the cell monolayer (14) is formed by suspending the cells (14a) and placing them between two parallel plates (2, 3).

4. The method of claim 3, wherein in step b) the cells (14a) in suspension are placed on the lower plate (2) and the upper plate (3) then is lowered after a defined time period, preferably about 10 min, until the cells (14a) are slightly compressed.

5. The method of claim 4, wherein in the end of step b), the cells (14a) adhere to both plates (2, 3).

6. The method of one or more of claims 1-5, wherein the cells (14a) contained in the cell sample are of low or high adherence to the plates (2, 3).

7. The method of one or more of the preceding claims, where the cell density can be adjusted to get a collection of isolated cells at a predefined density.

8. The method of one or more of the preceding claims, wherein the method comprises the additional step that the information obtained in step d) is used in a diagnostic method.

9. The method of claim 8, wherein the diagnostic method is for diagnosis of cancer/precancer.

10. The method of claims 8 or 9, wherein the change of the mechanical properties of the cell sample in view of normal cells is indicative for the presence of a cancerous/precancerous condition in a patient.

11. A device (1) for performing the method of one or more of the preceding claims, comprising:

- two essentially parallel and horizontal plates (2, 3) having a gap (8) between them;
- means for introducing biological cells (14a) in the gap (8);
- means for forming and maintaining a cell monolayer (14) in the gap (8);
- an actuator (5) for moving the two plates (2, 3) relative to each other for applying shear stress and/or shear deformation to the cell monolayer (14) causing the cells (14a) in the monolayer (14) to deform; and
- measuring means (16) for measuring the relative movement of the plates and/or the shear stress and/or shear deformation.

12. The device of claim 11, wherein the measuring means (16) is a transducer configured to measure a force and/or a torque transmitted by the actuator (5) to the plates for moving the two plates (2, 3) relative to each other and to measure the relative movement of the plates (2, 3) in terms of displacement and/or angular displacement.

13. The device of claims 11 or 12, wherein the actuator (5) is configured to rotate the upper plate (2) with respect to the lower plate (3).

14. The device of claim 13, wherein at least one of the plates (2, 3) comprises an elevated ring surface (25), so that only cells on the elevated ring contribute to the measurement.

15. The device of claim 14, wherein the elevated ring surface (25) is produced by means of a circular recess (23) formed in at least one of the plates, which circular recess (23) has a width (W) between 50 $\mu$m - 1 mm, preferably of about 100 $\mu$m.

16. The device of one or more of claims 11-15, having a controller (22) such that arbitrary torque-angular displacement and/or force-displacement relations can be measured.

17. The device of one or more of claims 11-16, wherein the means for forming and maintaining the cell monolayer (14) in the gap comprise an actuator (5) configured to adjust the distance between the plates, so that it is suitable for measurement, and maintain that distance during the measurement.

18. The device of one of claims 11 - 17, wherein a variation of the gap width (G) is below a half cell diameter, preferably below 1 micrometer, across the entire surface of the plates (2, 3) used for measuring.

19. The device of one or more of claims 11-18, wherein the two plates (2, 3) are maintained essentially parallel during the measurement.

20. The device of one or more of claims 11-19, further comprising optical means (17, 21) for checking the parallelism of the two plates (2, 3).

21. The device of one or more of claims 11-20, wherein the surfaces of the plates (2, 3) are coated with cell adhesion promoting molecules, preferably fibronectin.

22. The device of one or more of claims 11-21, wherein the means for introducing the cells comprise a hole (13) in one of the plates (2, 3), through which the cells can be introduced into the gap.

23. The device of one or more of claims 11-22, which additionally comprises a means for controlling the temperature of the plates.

24. The device of one or more of claims 11-23, which additionally comprises an objective (17) and/or a camera (21) for verifying the cell state, cell adhesion or to measure the cell density.

Fig. 1

Fig. 2
(A-A)

Figure 3

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

Figure 22

**European Patent Office**

**EUROPEAN SEARCH REPORT**

Application Number

EP 07 11 4178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | PULLARKAT ET AL: "Rheological properties of the Eukaryotic cell cytoskeleton" PHYSICS REPORTS, NORTH-HOLLAND, vol. 449, no. 1-3, 4 July 2007 (2007-07-04), pages 29-53, XP022141783 ISSN: 0370-1573 * paragraph [2.10] * * paragraph [03.8] * * paragraph [3.12]; figure 3 * ----- | 1-4,6,7, 11,13, 19,21 | INV. G01N3/22 G01N33/483 |
| A | THOUMINE O ET AL: "Microplates: a new tool for manipulation and mechanical perturbation of individual cells" JOURNAL OF BIOCHEMICAL AND BIOPHYSICAL METHODS, AMSTERDAM, NL, vol. 39, 1999, pages 47-62, XP002227568 ISSN: 0165-022X * paragraph [02.2]; figure 2 * ----- | 1-24 | |
| A | DE 196 34 704 A1 (DRESDEN ARZNEIMITTEL [DE]) 5 March 1998 (1998-03-05) * page 2, line 50 - page 3, line 25 * ----- | 1-24 | TECHNICAL FIELDS SEARCHED (IPC) G01N |

The present search report has been drawn up for all claims

| Place of search | Date of completion of the search | Examiner |
|---|---|---|
| Munich | 8 January 2008 | Komenda, Peter |

EPO FORM 1503 03.82 (P04C01)

## ANNEX TO THE EUROPEAN SEARCH REPORT
## ON EUROPEAN PATENT APPLICATION NO.

EP 07 11 4178

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2008

| Patent document cited in search report | | Publication date | Patent family member(s) | | Publication date |
|---|---|---|---|---|---|
| DE 19634704 | A1 | 05-03-1998 | AU | 4205897 A | 19-03-1998 |
| | | | WO | 9809150 A1 | 05-03-1998 |

EPO FORM P0459

For more details about this annex : see Official Journal of the European Patent Office, No. 12/82

EP 2 023 119 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9944488 A
- US 6067859 A
- EP 1059871 A

**Non-patent literature cited in the description**

- **ALBERTS et al.** Molecular Biology of the Cell. Garland Publishing, 1994
- Cytoskeletal Proteins in Tumor Diagnosis. **M. OSBORN ; K .WEBER.** Current Communications in Molecular Biology. Cold Spring Harbor Laboratory Publications, 1989
- **JOCHEN GUCK ; STEFAN SCHINKINGER ; BRYAN LINCOLN ; FALK WOTTAWAH ; SUSANNE EBERT ; MAREN ROMEYKE ; DOMINIK LENZ ; HAROLD M.** *Optical Deformability as an Inherent Cell Marker for Testing Malignant Transformation and Metastatic Competence*
- **ERICKSON ; REVATHI ANANTHAKRISHNAN ; DANIEL MITCHELL ; JOSEF KÄS ; SYDNEY ULVICK ; CURT BILBY.** *Biophys. J.,* 2005, vol. 88, 3689-3698
- **B. D. HOFFMAN ; G. MASSIERA ; K. M. VAN CITTERS ; J. C. CROCKER.** *Proc. Nat Acad. Sci.,* 2006, vol. 103 (27), 10259-10264
- **P. FERNANDEZ ; P.A. PULLARKAT ; A. OTT.** *Biophysical Journal,* 2006, vol. 90 (9), 3796-3805
- **O. THOUMINE ; A. OTT.** *J. Cell Sci,* 1997, vol. 110, 2109-2116
- **S. SURESH ; J. SPATZ ; J.P. MILLS ; A. MICOULET ; M. DAO ; C.T. LIM ; M. BEIL ; T. SEUFFERLEIN.** *Acta Biomaterialia,* 2005, vol. 1, 15-30
- **STEFAN SCHINKINGER ; BRYAN LINCOLN ; FALK WOTTAWAH ; SUSANNE EBERT ; MAREN ROMEYKE ; DOMINIK LENZ ; HAROLD M. ERICKSON ; REVATHI ANANTHAKRISHNAN ; DANIEL MITCHELL ; JOSEF KÄS.** Optical Deformability as an Inherent Cell Marker for Testing Malignant Transformation and Metastatic Competence Jochen Guck. *Biophys. J.,* 2005, vol. 88, 3689-3698
- **B. ALBERTS ; D. BRAY ; J. LEWIS ; M. RAFF ; K. ROBERTS ; J. D. WATSON.** Molecular Biology of the Cell. Garland Publishing, Inc, 1994
- **D. BRAY.** Cell Movements : from molecules to motility. Garland Publishing, Inc, 2001
- **P. PULLARKAT ; P. FERNANDEZ ; A. OTT.** Rheological properties of the eukaryotic cell cytoskeleton. *Physics Reports,* March 2007
- **B. FABRY ; G. N. MAKSYM ; J. P. BUTLER ; M. GLOGAUER ; D. NAVAJAS ; J. J. FREDBERG.** Scaling the microrheology of living cells. *Phys. Rev. Lett.,* 2001, vol. 87 (14), 148102
- **M. BALLAND ; A. RICHERT ; F. GALLET.** The dissipative contribution of myosin ii in the cytoskeleton dynamics of myoblasts. *Eur. Biophys. J.,* 2005, vol. 34, 255-261
- **N. DESPRAT ; A. RICHERT ; J. SIMEON ; A. ASNACIOS.** Creep function of a single living cell. *Biophys. J.,* 2005, vol. 88, 2224-2233
- **H.H. WINTER ; F. CHAMBON.** Analysis of linear viscoelasticity of a crosslinking polymer at the gel point. *J. Rheology,* 1986, vol. 30 (2), 367-382
- **P. A. FERN'ANDEZ ; P. A. PULLARKAT ; A. OTT.** A master relation defines the nonlinear viscoelasticity of single fibroblasts. *Biophys. J.,* 2006, vol. 90 (9), 3796-3805
- **F. WOTTAWAH ; S. SCHINKINGER ; B. LINCOLN ; R. ANANTHAKRISHNAN ; M. ROMEYKE ; J. GUCK ; J. K¨AS.** Optical rheology of biological cells. *Phys.Rev.Lett.,* 2005, vol. 94, 098103
- **P. A. FERN'ANDEZ ; A. OTT.** Single fibroblast viscoplasticity: stress stiffening and kinematic hardening. *preparation,* 2007
- **E. HECHT ; A. ZAJAC.** Optics. Addison-Wesley, 1974
- **G. J. TODARO ; H. GREEN.** Quantitative studies of the growth of mouse embryo cells in culture and their development into established lines. *J. Cell. Biol.,* 1963, vol. 17, 299-313
- **G. J. TODARO ; K. HABEL ; H. GREEN.** Antigenic and cultural properties of cells doubly transformed by polyoma virus and sv40. *Virology,* 1965, vol. 27, 179-185
- **H. G. DREXLER ; W. DIRKS ; W. R. A. F. MACLEOD ; H. QUENTMEIER ; K. G. STEUBE ; C. C. UPHOFF.** *DSMZ Catalogue of Human and Animal Cell Lines,* 2001

34

- **A. C. PIPKIN.** Lectures on viscoelasticity theory. Springer, 1972
- **P.A. FERN'ANDEZ.** Mechanics of living cells: nonlinear viscoelasticity of single fibroblasts and shape instabilities in axons. 2006
- **Y. C. FUNG.** Biomechanics: Mechanical properties of living tissues. Springer Verlag, 1993
- **I. SPECTOR ; N. R. SHOCHET ; Y. KASHMAN ; A. GROWEISS.** Latrunculins: novel marine toxins that disrupt microfilament organization in cultured cells. *Science,* 1983, vol. 219, 493-495
- **J. V. SMALL ; K. ROTTNER ; P. HAHNE ; K. I. ANDERSON.** Visualising the actin cytoskeleton. *Microsc.Res.Tech.,* 1999, vol. 47, 3-17
- **A. F. STRAIGHT ; A. CHEUNG ; J. LIMOUZE ; I. CHEN ; N. J.WESTWOOD ; J. R. SELLERS ; T. J. MITCHISON.** Dissecting temporal and spatial control of cytokinesis with a Myosin II inhibitor. *Science,* 2003, vol. 299, 1743-1747
- **M. KOV'ACS ; J. T'OTH ; C. HET'ENYI ; A.M'ALN'ASI-CSIZMADIA ; J.R. SELLERS.** Mechanism of Blebbistatin inhibition of Myosin II. *J. Biol. Chem,* 2004, vol. 279 (34), 35557-35563
- **G. SALBREUX ; J. F. JOANNY ; J. PROST ; P. A. PULLARKAT.** *Shape oscillations of non-adhering fibroblast cells,* 2006
- **K. OBARA ; K. NOBE ; H. NOBE ; M. S. KOLODNEY ; P. DE LANEROLLE ; R. J. PAUL.** Effects of microtubules and microfilaments on [Ca2+]i and contractility in a reconstituted fibroblast fiber. *Am. J. Physiol. Cell Physiol,* 2000, vol. 279, C785-C796
- **T. WAKATSUKI ; M. S. KOLODNEY ; G. I. ZAHALAK ; E. L. ELSON.** Cell mechanics studied by a reconstituted model tissue. *Biophys. J.,* 2000, vol. 79, 2353-2368
- **L. EICHINGER ; B. KOPPEL ; A.A. NOEGEL ; M. SCHLEICHER ; M. SCHLIWA ; K. WEIJER ; W. WITKE ; P.A. JANMEY.** Mechanical perturbation elicits a phenotypic difference between dictyostelium wild-type cells and cytoskeletal mutants. *Biophys.J.,* 1996, vol. 70 (2), 1054-1060
- **G. LENORMAND ; E. MILLET ; B. FABRY ; J. P. BUTLER ; J. J. FREDBERG.** Linearity and time-scale invariance of the creep function in living cells. *J.R.Soc.Lond.Interface,* 2004
- **B. A. SMITH ; B. TOLLOCZKO ; J. G. MARTIN ; P. GR¨UTTER.** Probing the viscoelastic behavior of cultured airway smooth muscle cells with atomic force microscopy: stiffening induced by contractile agonist. *Biophys. J.,* 2005
- **J. GUCK ; R. ANANTHAKRISHNAN ; H. MAHMOOD ; T. J. MOON ; C. CASEY CUNNINGHAM ; J. K"AS.** The optical stretcher: a novel laser tool to micromanipulate cells. *Biophys.J.,* 2001, vol. 81, 767-784
- **A. R. BAUSCH ; K. KROY.** A bottom-up approach to cell mechanics. *Nature Physics,* 2006, vol. 2, 231-238
- **C. STORM ; J. J. PASTORE ; F. C. MACKINTOSH ; T. C. LUBENSKY ; P. A. JANMEY.** Nonlinear elasticity in biological gels. *Nature,* 2005, vol. 435, 191-194
- Modeling and simulation of remodeling in soft biological tissues. **E. KUHL ; A. MENZEL ; K. GARIKIPATI ; E.M. ARRUDA ; K. GROSH.** Mechanics of biological tissue. Springer-Verlag, 2006, 77-89
- Floppy modes and non-affine deformations in random fiber networks. **C. HEUSSINGER ; E. FREY.** Phys. Rev. Lett.
- **P. R. ONCK ; T. KOEMAN ; T. VAN DILLEN ; E. VAN DER GIESSEN.** Alternative explanation of stiffening in cross-linked semiflexible networks. *Phys.Rev.Lett.,* 2005, vol. 95, 178102
- **W. PRAGER ; H. GEIRINGER.** Mechanik isotroper körper im plastischen zustand. *Ergebnisse der exakten Naturwissenschaften,* 1934, vol. 13
- Constitutive behavior based on crystal plasticity. **U. F. KOCKS.** Unified constitutive equations for creep and plasticity. Elsevier, 1987, 1-88
- **D. C. STOUFFER ; L. THOMAS DAME.** Inelastic deformation of metals. Models, mechanical properties, and metallurgy. John Wiley, Inc, 1996
- **P. HAUPT.** Continuum mechanics and theory of materials. Springer, 2002
- **S. NEMAT-NASSER.** Plasticity: A Treatise on Finite Deformation of Heterogeneous Inelastic Materials. Cambridge University Press, 2004